# EUROPEAN PATENT APPLICATION

(11) **EP 1 531 385 A2**
(43) Date of publication of application: **18.05.2005**
(21) Application number: 04026591.0
(22) Date of filing: 09.11.2004
(51) Int. Cl.: G06F 1/28

(54) **Memory card access in a battery operated device**

(30) Priority: 12.11.2003 JP 2003382869
(71) Applicant: Fujinon Corporation, Saitama-shi Saitama 331-9624 (JP)
(72) Inventor: Yoshida, Hideo, Saitama-shi Saitama 331-9624 (JP)
(74) Representative: Klunker . Schmitt-Nilson . Hirsch

(57) **Abstract**

The present invention relates to an apparatus, such as a digital camera, in which a battery is removably loaded and a memory card is detachably inserted so that the apparatus is supplied with power from the battery and performs processing including writing data on the memory card. The invention ensures that data write inhibit operation on the memory card is performed before the memory card is removed. A memory card slot for inserting the memory card is provided inside a battery lid to be accessible by opening the battery lid. A circuit detects separation of a battery contact plate from the battery due to opening of the battery lid and turns the memory card to a write protect state.

## Description

### BACKGROUND OF THE INVENTION

### Field of the Invention

The present invention relates to an apparatus in which a battery is removably loaded and a memory card is detachably inserted so that the apparatus is supplied with power from the battery and performs processing including writing data on the memory card.

### Description of the Related Art

In recent years, battery-operated portable apparatus with information processing functions in which a memory card is inserted to write data on the memory card have been widely used. Examples of such apparatus include digital cameras, PDAs (Personal Data Assistances), and battery-operated notebook personal computers.

Although depending on the type of the memory card, if the memory card is removed in a data write permit state, the memory card may malfunction.

Japanese Patent Laid-Open No. 10-079909 proposes a technique that involves providing a lid member common to both a battery room for loading a battery and a card slot for inserting a memory card, and providing a battery contact plate on the lid member, so that opening the lid shuts off power supply to internal circuitry including the memory card.

Japanese Patent Laid-Open No. 11-017987 proposes providing a lid for protecting an inserted memory card, and providing a switch inside the lid for detecting opening and closing of the lid.

The apparatus often have a terminal to which a communication cable, for example the one compatible with the USB standard, is connected. Japanese Patent Laid-Open No. 2002-314859 proposes switching to using external power supplied via a communication cable if a power switch is off and power is not supplied from a battery.

Of these proposals, the proposal in Japanese Patent Laid-Open No. 10-079909, which involves providing the lid common to the battery room and the card slot and providing the battery contact plate on the lid, poses the following problem. That is, it may not ensure proper data write inhibit operation on the memory card although opening the lid shuts off the power supply to the memory card and the internal circuitry. Therefore, it may not prevent the memory card from malfunctioning.

The proposal in Japanese Patent Laid-Open No. 11-017987, which involves providing the lid for protecting the memory card and providing the switch for detecting opening and closing of the lid, requires extra space for the switch because the switch employed is a mechanical switch. Therefore, it goes against a requirement of minimizing the size of the apparatus.

Further, the technique proposed in Japanese Patent Laid-Open No. 2002-314859, which involves using power supplied via the USB cable if the power switch is off and power is not supplied from the battery, may not ensure proper data write inhibit operation on the memory card if the USB cable is detached from the apparatus. Therefore, it is insufficient in point of preventing the memory card from malfunctioning.

However, using only the power from the battery even when the USB cable is connected causes a problem that data reading or writing may be interrupted if a battery voltage drops.

### SUMMARY OF THE INVENTION

The present invention has been made in view of the above circumstances and provides an apparatus that ensures that data write inhibit operation on a memory card is performed before the memory card is removed.

To achieve this, the present invention provides an apparatus in which a battery is removably loaded and a memory card is detachably inserted so that the apparatus is supplied with power from the battery and performs processing including writing data on the memory card. The apparatus includes:
a battery room into which the battery is loaded;
a battery lid that has a battery contact plate and openably closes the battery room;
a memory card slot into which the memory card is inserted;
removal interface means that allows the memory card inserted into the memory card slot to be removable only when the battery lid is open;
a voltage detection circuit that detects a voltage drop due to opening of the battery lid; and
a write operation inhibit circuit that inhibits data write operation on the memory card in response to detection of the voltage drop to a predetermined voltage by the voltage detection circuit.

The apparatus according to the present invention allows the memory card to be removable only when the battery lid is open, and further inhibits data write operation on the memory card upon opening of the battery lid, that is, upon a voltage drop due to separation of the battery contact plate. The data write operation on the memory card is inhibited upon opening of the battery lid, which precedes removal of the memory card. Therefore, this ensures that the memory card is prevented from malfunctioning due to removal of the memory card for which data write operation is not inhibited.

The apparatus according to the present invention preferably includes a power supply circuit having an output from which power from the battery in the battery room is supplied toward internal circuitry, and to which a capacitor for stabilizing an output voltage is connected. The voltage detection circuit preferably detects a voltage at the output of the power supply circuit.

In recent years, many apparatus incorporate a microcomputer chip for controlling the apparatus. In that case, if the voltage of power supplied to the microcomputer drops to a certain voltage or less, the operation of the microcomputer cannot be guaranteed. This may lead to runaway of the microcomputer's operation (the microcomputer operates in an inconsistent, unexpected manner) and to corruption of the apparatus. The microcomputer must be reset before the voltage drops to the certain voltage. Therefore, to reset the microcomputer, it is required to detect the voltage at the output of the power supply circuit that supplies power to the microcomputer.

According to the present invention, if the voltage detection circuit for inhibiting data write operation on the memory card is to detect the voltage at the output of the power supply, a voltage detection circuit for resetting the microcomputer can double as the voltage detection circuit for inhibiting data write operation. In this manner, objects of the present invention are achieved without additional costs.

The apparatus according to the present invention preferably includes: an external terminal that receives external power supply; and two diodes in which each cathode is interconnected while an anode of one diode is connected to the battery and an anode of the other diode is connected to the external terminal, and power is supplied to internal circuitry via a node of the interconnected cathodes. The voltage detection circuit preferably detects a voltage at the anode of one of the two diodes that has its anode connected to the battery.

When the two diodes are provided in this manner to receive external power supplied via a cable, for example a USB cable, it is preferred in point of stable power supply to use both the power from the battery and the externally supplied power. In that case, the opening of the battery lid can be detected by the voltage detection circuit detecting the voltage at the anode of one of the two diodes that has its anode connected to the battery. Thus, the memory card can be turned to a data write operation inhibit state before the memory card is removed.

The removal interface means preferably allows the memory card inserted into the memory card slot to be removable only when the battery lid is open by having the memory card slot arranged to be opened and closed together with the battery room by the battery lid.

In this manner, configuration of the removal interface means is facilitated.

The apparatus according to the present invention may be an image taking apparatus that takes an image of a subject, obtains image data, and writes the image data on the memory card. For example, the apparatus may be a digital camera or a cellular phone with functions of a digital camera.

In an aspect of the present invention where the apparatus includes the external terminal, the external terminal may be a terminal that accepts connection of a communication cable compatible with a communication standard for both power supply and data communication. The apparatus maybe supplied with power via the communication cable connected to the external terminal and send and/or receive data via the communication cable.

The present invention may also be applied to apparatus that send or receive data via a communication cable, for example a USB cable.

As described above, the present invention ensures that data write operation on the memory card is inhibited before the memory card is removed.

### BRIEF DESCRIPTION OF THE DRAWINGS

Fig. 1 is external views of a digital camera according to a first embodiment of the present invention;
Fig. 2 shows the same digital camera as Fig. 1 with its battery lid opened, and the inside of the battery lid;
Fig. 3 is a block diagram showing circuitry of the digital camera shown in Figs. 1 and 2;
Fig. 4 shows a power supply circuit and internal circuitry to which power is supplied by the power supply circuit in the digital camera according to the embodiment;
Fig. 5 is a timing chart (B) for the circuitry shown in Fig. 4 and an exemplary timing chart (A) for comparison;
Fig. 6 is external views of a digital camera according to a second embodiment of the present invention;
Fig. 7 is a block diagram showing circuitry of the digital camera shown in Fig. 6;
Fig. 8 shows how the digital camera shown in Fig. 6 and a personal computer are connected by a USB cable;
Fig. 9 shows a power supply circuit and internal circuitry to which power is supplied by the power supply circuit in the digital camera according to the second embodiment shown in Figs. 6 and 7;
Fig. 10 is a timing chart for the circuitry shown in Fig. 9; and
Fig. 11 shows a variation of the first and second embodiments.

### DETAILED DESCRIPTION OF THE INVENTION

Now, embodiments of the present invention will be described below.

Description will be made herein for a digital camera, which is an example of apparatus according to the present invention.

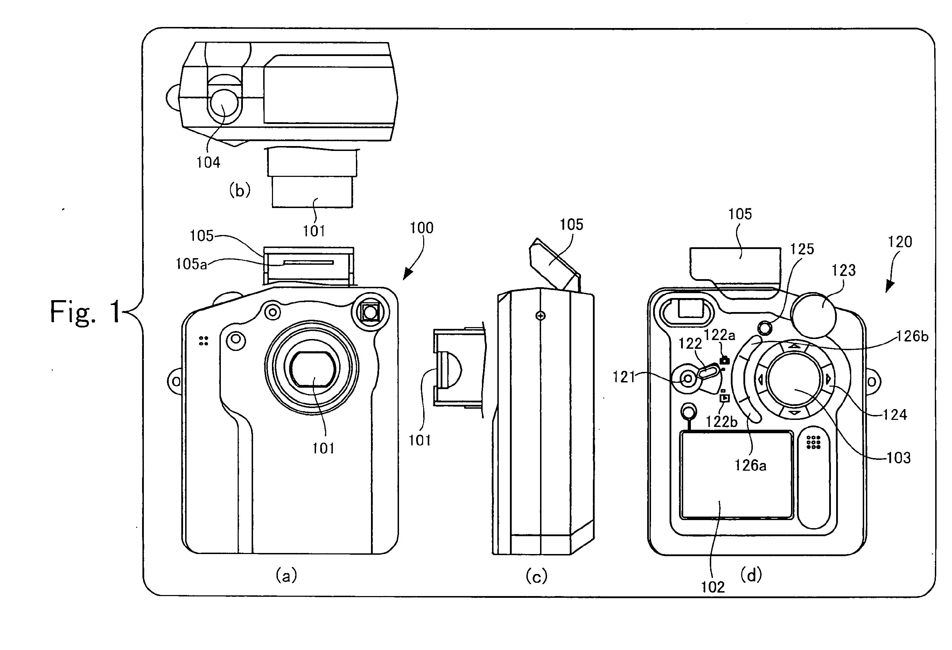

Fig. 1 is external views of a digital camera according to a first embodiment of the present invention. Part (a) of Fig. 1 is a front view, part (b) of Fig. 1 is a plan view, part (c) of Fig. 1 is a side view, and part (d) of Fig. 1 is a rear view.

The digital camera 100 shown in parts (a) to (d) of Fig. 1 is a digital camera that shoots a subject and generates image data.

As shown in part (a) of Fig. 1, the front of the digital camera 100 according to this embodiment has an image taking zoom lens 101. The top of the digital camera 100 has a flashing device 105 including a flash bulb 105a that emits a flash.

Further, as shown in part (d) of Fig. 1, the rear of the digital camera 100 has an operating section 120 for a user to perform various operations during use of the digital camera 100.

The operating section 120 includes: a power switch for power-on 121 for activating the digital camera 100; a shooting/playback switching lever 122 for arbitrarily switching between shooting and playback; a shooting mode dial 123 for selecting shooting modes such as auto shooting and manual shooting; a cruciform switch 124 for setting and selecting various menu items and for zooming; a flashing switch 125; and an execution switch 126a for executing a menu item selected with the cruciform switch 124 and a cancel switch 126b for canceling the menu item.

The rear of the digital camera 100 also has a liquid crystal monitor 102 for displaying images such as shot images and playback images, as well as a display section 103 for helping operations.

Further, as shown in part (b) of Fig. 1, the top of the digital camera 100 has a shutter button 104. The shutter button 104 indicates the start of shooting to a CPU, which will be described below, installed in the digital camera 100. This digital camera 100 allows arbitrary switching between shooting and playback with the shooting/playback switching lever 122, so that the user shifts the shooting/playback switching lever 122 to a shooting side 122a when shooting and to a playback side 122b when playing back.

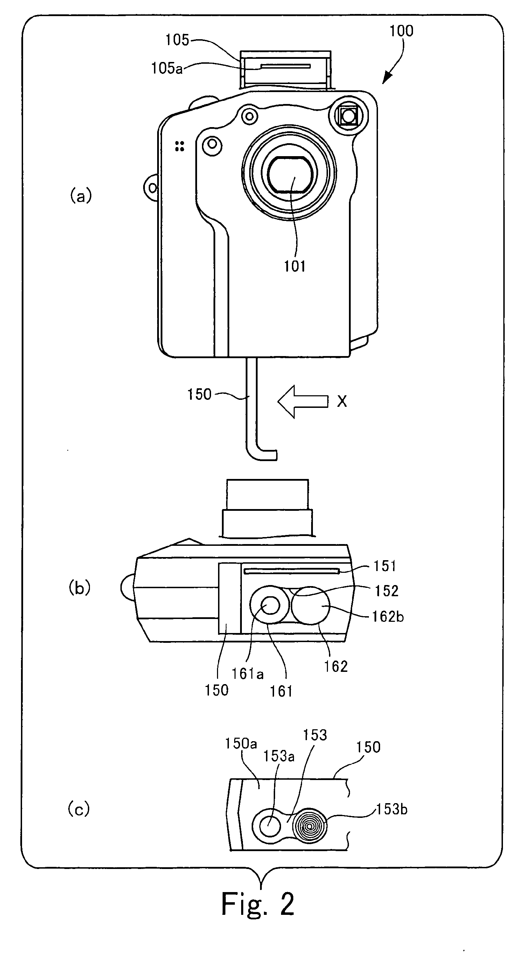

Fig. 2 shows the same digital camera as Fig. 1 with its battery lid opened, and the inside of the battery lid. Parts (a) and (b) of Fig. 2 are a front view and a bottom view of the digital camera with the battery lid opened, respectively. Part (c) of Fig. 2 shows the battery lid viewed in the direction of an arrow X shown in part (a) of Fig. 2.

As shown in part (b) of Fig. 2, inside the opened battery lid 150 are provided a memory card slot 151 into which a memory card is inserted and a battery room 152 into which batteries are loaded. In part (b) of Fig. 2, two batteries 161 and 162 are already loaded in the battery room 152. These two batteries are loaded in the opposite direction with respect to each other: one battery 161 has its positive terminal 161a directed to the battery lid, and the other battery 162 has its negative terminal 162b directed to the battery lid.

As shown in part (c) of Fig. 2, a battery contact plate 153 is provided on the inner surface of the battery lid 150. The battery contact plate 153 consists of a positive terminal-side contact 153a that contacts the positive terminal 161a of the battery 161, and a negative terminal-side contact 153b that contacts the negative terminal 162b of the battery 162. These two contacts 153a and 153b are integrated to form the battery contact plate 153 as a whole.

Since the battery lid 150 has the battery contact plate 153, closing the battery lid 150 allows the two batteries 161 and 162 to be connected in serial to supply power to the inside of the digital camera, and opening the battery lid 150 allows the batteries to be disconnected to shut off the power supply.

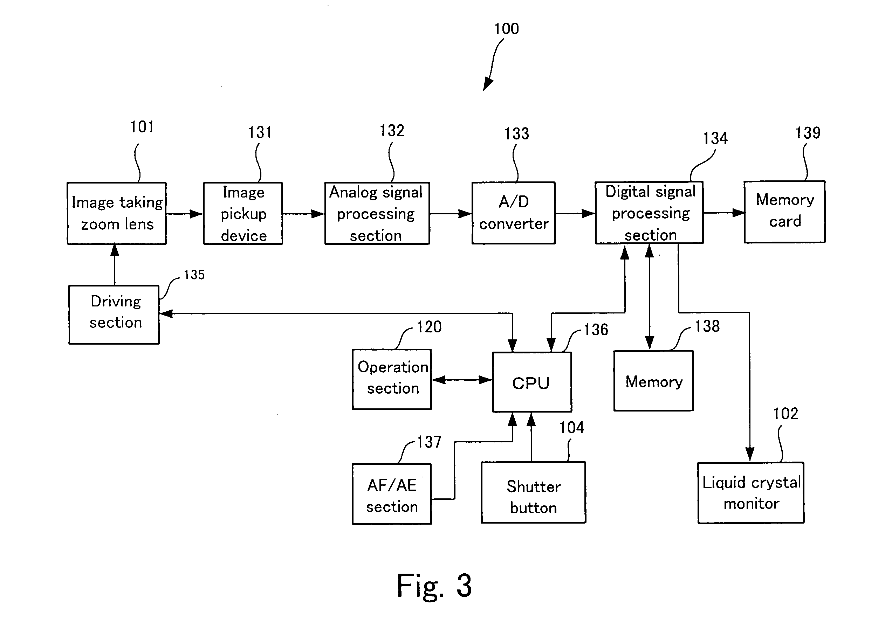

Fig. 3 is a block diagram showing circuitry of the digital camera shown in Figs. 1 and 2.

The digital camera 100 has the image taking zoom lens 101 and an image pickup device 131 that converts a subject image formed through the image taking zoom lens 101 into an analog image signal. The image taking zoom lens 101 is driven by a driving section 135 under instructions from a CPU 136 described below.

The digital camera 100 also has: an analog signal processing section 132 that performs analog signal processing such as gamma correction and white balance adjustment on the analog image signal from the image pickup device 131; an A/D converter 133 that converts the analog image signal processed in the analog signal processing section 132 into a digital image signal; and a digital signal processing section 134 that digitally processes the image signal from the A/D converter 133. The image data digitally processed in the digital signal processing section 134 is output to the liquid crystal monitor 102 and to a memory card 139 described below.

The digital camera 100 further has the CPU 136 that provides instructions to the digital signal processing section 134 and receives inputs of operational information from the shutter button 104.

The digital camera 100 also has: an AE/AF section 137 that outputs AE data for automatic exposure adjustment and AF data for automatic focusing adjustment to the CPU 136; and the operating section 120 including the power switch 121, the shooting/playback switching lever 122, the shooting mode dial 123, the cruciform switch 124, the flashing switch 125, the execution switch 126a, and the cancel switch 126b. The digital camera 100 further has the shutter button 104 shown in Fig. 1.

The digital camera 100 further has: memory 138 that temporarily stores the image data from the digital signal processing section 134 and outputs the stored image data to the digital signal processing section 134; and the memory card 139 inserted therein that stores the image data from the digital image processing section 134.

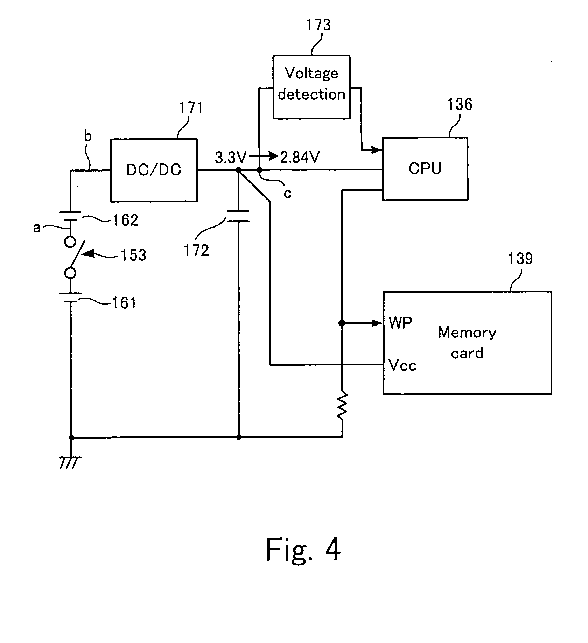

Fig. 4 shows a power supply circuit and internal circuitry to which power is supplied by the power supply circuit in the digital camera according to this embodiment. For simplicity of illustration, only the CPU 136 and the memory card 139, which are essential for describing features of this embodiment, are shown here for the inner circuitry.

When the battery lid 150 shown in Fig. 2 is closed, the battery contact plate 153 connects the two batteries 161 and 162 in series to supply power of the batteries 161 and 162 to the DC/DC converter 171. The DC/DC converter 171 is a circuit that outputs the power supplied from the batteries 161 and 162 after converting the power into power that is always constant in voltage (for example 3.3 V) even if the battery voltage varies within a certain range. A capacitor 172 with a large capacity (for example 100 µF) for voltage stabilization is connected to the output of the DC/DC converter 171.

The power is supplied from the output of the DC/DC converter 171 to the components of the internal circuitry, such as the CPU 136, the memory card 139, and various other components that are not shown.

As shown in Fig. 3, the image data digitally processed in the digital signal processing section 134 is written on the memory card 139. Here, an 'H' level signal is output from the CPU 136 to a write protect terminal WP of the memory card 139, and therefore the memory card 139 is in a data write permit state.

There is provided a voltage detection circuit 173 that detects the voltage at the output of the DC/DC converter 171. If the output voltage of the DC/DC converter 171 drops to a predetermined voltage, for example 2.84 V or less, the voltage detection circuit 173 notifies the CPU 136 of the voltage drop. One of the causes of the drop in output voltage of the DC/DC converter 171 is separation of the battery contact plate 153 from the batteries 161 and 162 due to opening of the battery lid 150 (see Fig. 2).

In response to the voltage drop notification from the voltage detection circuit 173, the CPU 136 first reduces the potential of the write protect terminal WP of the memory card 139 to the 'L' level. The memory card 139 then shifts to a data write inhibit state in response to the reduction of the potential of the write protect terminal WP to the 'L' level. The CPU 136, after reducing the potential of the write protect terminal WP of the memory card 139 to the 'L' level in response to the voltage drop notification from the voltage detection circuit 173, resets itself to avoid uncontrolled operation.

If the memory card 139 is removed from the memory card slot 151 shown in Fig. 2 before the 'L' level signal is input to the write protect terminal WP, that is, before the transition to the data write inhibit state occurs, it may cause a malfunction. However, opening the battery lid 150 causes the memory card 139 to receive the 'L' level signal that is input at its write protect terminal WP and to shift to the data write inhibit state. Therefore, the malfunction due to the above cause is prevented even if the memory card 139 is removed from the memory card slot 151 thereafter.

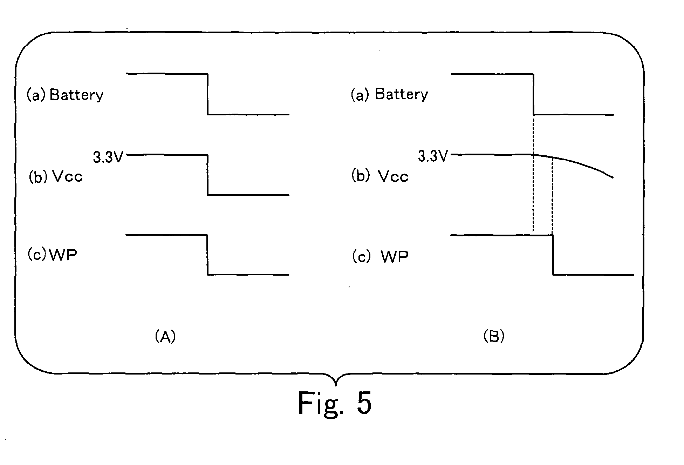

Fig. 5 is timing charts for the circuitry shown in Fig. 4 illustrating a case (A) where the capacitor 172 is not provided and a case (B) where the capacitor 172 is provided as shown in Fig. 4.

If the battery lid 150 (see Fig. 2) is opened to disconnect the battery contact plate 153 and the batteries 161, 162, the power supply path from the batteries is shut off. Therefore, as shown in (a) of parts (A) and (B) of Fig. 5 respectively, the voltage that is input from the batteries to the DC/DC converter 171 shown in Fig. 4 becomes 0 V. If the capacitor 172 is not provided, then the voltage at the output of the DC/DC converter 171, that is, the voltage V_{CC} of the power supplied to the CPU 136 and the memory card 139 plummets from 3.3 V to 0 V, as shown in (b) in part (A) of Fig. 5. Thus, the write protect terminal WP of the memory card 139 cannot be securely turned to the 'L' level before the voltage V_{cc} drops ((c) in part (A) of Fig. 5).

On the other hand, in the embodiment shown in Fig. 4, the capacitor 172 with a large capacity (for example 100 µF) is connected to the output of the DC/DC converter 171 and is charged while the 3.3 V is output from the DC/DC converter 171. Therefore, even if the battery lid 150 is opened to disconnect the battery contact plate 153 and the batteries 161, 162, the voltage V_{CC} of the power supplied to the CPU 136 and the memory card 139 does not plummet. Rather, as shown in (b) of part (B) of Fig. 5, the voltage V_{cc} slowly decreases while discharging little by little the charge that has been charged in the capacitor 172. Thus, the write protect terminal WP of the memory card 139 can be securely turned to the 'L' level while the voltage V_{cc} is on a voltage level that guarantees operation ((c) of part (B) of Fig. 5).

In this first embodiment, the voltage drop is detected at the point c shown in Fig. 4. However, the voltage drop may be detected at a point other than the point c such as the point a or b to perform the same processing as above.

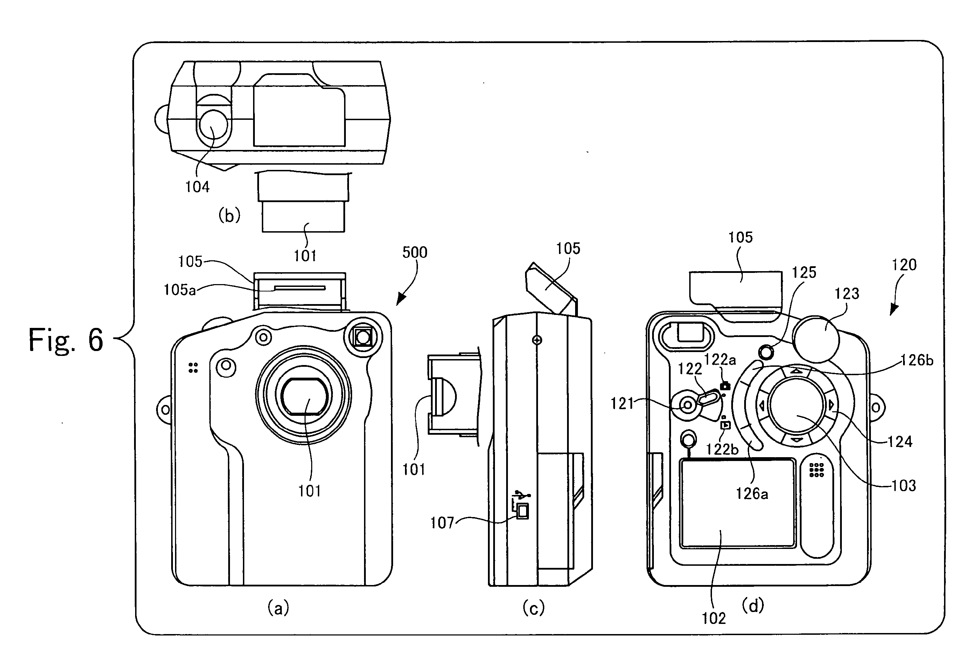

Fig. 6 is external views of a digital camera according to a second embodiment of the present invention. Parts (a), (b), (c), and (d) of Fig. 6 are a front view, a plan view, a side view, and a rear view, respectively.

In Fig. 6, the same elements as those of the digital camera according to the first embodiment shown in Fig. 1 are designated with the same symbols as in Fig. 1, and only what is different will be described.

The digital camera 500 shown in Fig. 6 is configured to be able to send image data obtained by shooting of the digital camera 500 to a device such as a computer via a USB cable (an example of what is referred to as a communication cable in the present invention), which is not shown in Fig. 6. Therefore, the digital camera 500 shown in Fig. 6 has a USB connector 107 on one of its sides for connecting the USB cable, as shown in part (c) of Fig. 6.

Other elements shown in Fig. 6 of the digital camera 500 shown in Fig. 6 are the same as those of the digital camera 100 shown in Fig. 1 and will not be described here.

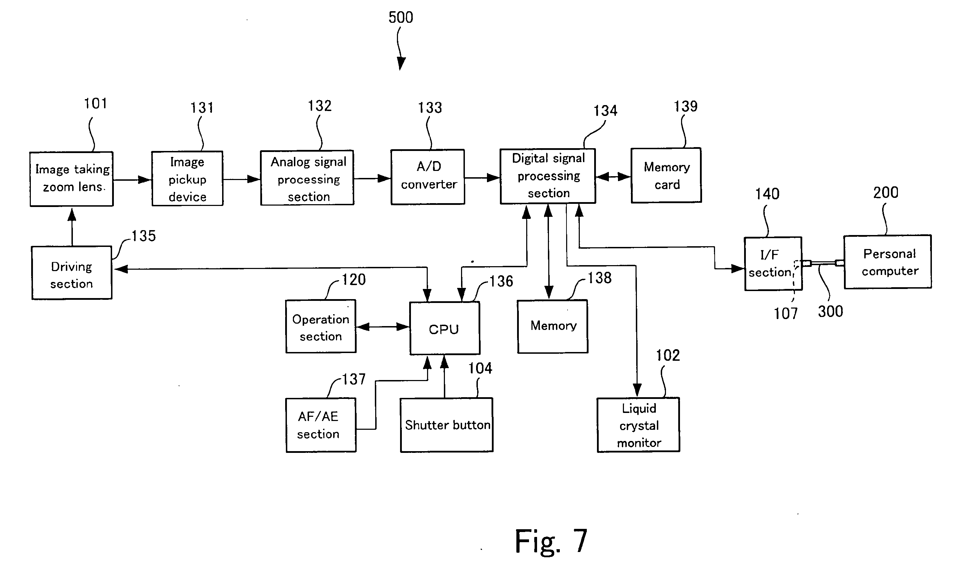

Fig. 7 is a block diagram showing circuitry of the digital camera shown in Fig. 6.

In Fig. 7, which corresponds to Fig. 3 for the first embodiment, the same elements as shown in Fig. 3 are designated with the same symbols as in Fig. 3 and will not be described again.

In the block diagram of Fig. 7, an I/F section 140 is shown as an element not shown in Fig. 3. A USB cable 300 connects the I/F section 140 and a personal computer 200.

The I/F section 140 is an interface for sending and receiving image data between the digital signal processing section 134 and the personal computer 200. The USB connector 107 shown in Fig. 6 is included in this I/F section 140.

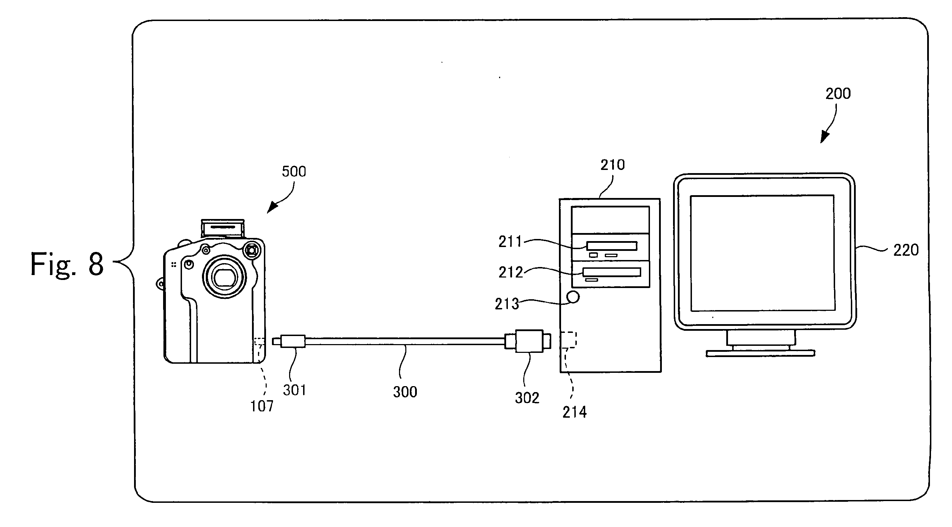

Fig. 8 shows how the digital camera shown in Fig. 6 and the personal computer are connected by the USB cable.

The digital camera 500 shown in Fig. 8 has the USB connector 107. The USB connector 107 is coupled to one end 301 of the USB cable 300 that forms a communication path to the personal computer 200 described below.

The personal computer 200 includes a main body section 210 and a display 220. The main body section 210 includes therein a CPU (Central Processing Unit), RAM (Random Access Memory) , a hard disk, and an I/F board for USB. The main body section 210 also has, on its outer surface, a CD-ROM loading slot 211 for loading a medium such as a CD-ROM that stores driver software for the digital camera 100, and a flexible disk loading slot 212 for loading a flexible disk. Included in these loading slots 211 and 212 are a CD-ROM drive and a flexible disk drive for driving and accessing a CD-ROM and a flexible disk loaded through the respective loading slots. The main body section 210 further has a power switch 213, as well as a USB connector 214 that is coupled to the other end 302 of the USB cable 300.

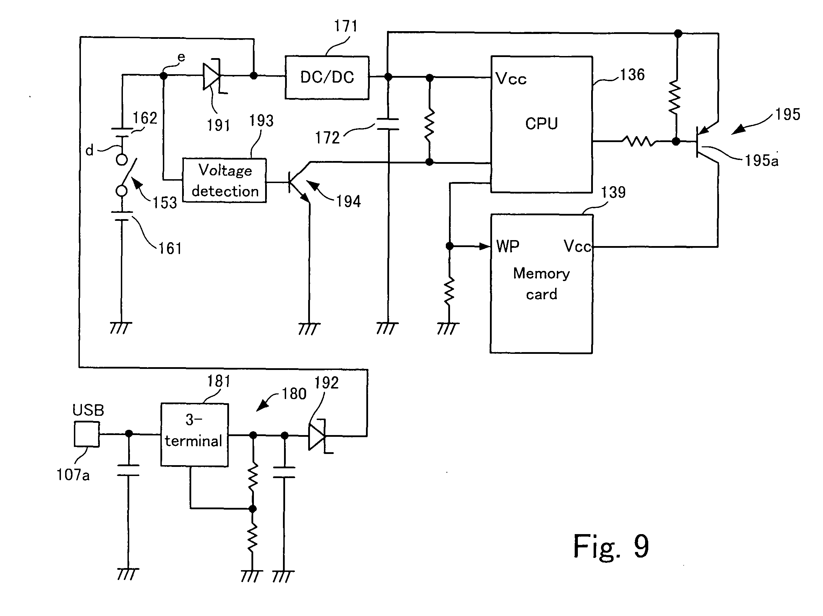

Fig. 9 shows a power supply circuit and internal circuitry to which power is supplied by the power supply circuit in the digital camera according to the second embodiment shown in Figs. 6 and 7. Fig. 9 corresponds to Fig. 4 for the first embodiment. As with Fig. 4, for simplicity of illustration, only those circuit components that are essential for describing features of this embodiment are shown for the inner circuitry. Also in Fig. 9, the same elements as in Fig. 4 are designated with the same symbols as in Fig. 4 and will not be described again.

A diode 191 is provided between the batteries 161, 162 and the DC/DC converter 171 so that its anode is directed to the batteries and its cathode is directed to the DC/DC converter 171. The power from the batteries 161 and 162 is input to the DC/DC converter 171 via the diode 191.

Fig. 9 also shows a USB power supply terminal 107a. The USB power supply terminal 107a is one of the terminals that constitute the USB connector 107 shown in Figs. 6 to 8. When the digital camera 500 and the personal computer 200 are connected by the USB cable 300 as shown in Fig. 8, power with a DC voltage of 5.0 V is supplied from the personal computer 200 to the USB power supply terminal 107a via the USB cable 300.

The power supplied to the USB power supply terminal 107a is converted to power with a DC voltage of 3.0 V by a power supply stabilization circuit 180 that consists of a three-terminal regulator 181 and several resistors and capacitors. A diode 192 is provided between the power supply stabilization circuit 180 and the DC/DC converter 171 so that its anode is directed to the power supply stabilization circuit 180 and its cathode is directed to the DC/DC converter 171. The power that is output from the power supply stabilization circuit 180 is input to the DC/DC converter 171 via the diode 192.

Thus, the two diodes 191 and 192 have their cathode connected to each other, while the anode of the diode 191 is connected to the batteries and the anode of the diode 192 is connected to the external power.

The power that passes through the DC/DC converter 171 is supplied to the CPU 136 and other internal circuits not shown. However, in this embodiment, the memory card 139 is supplied with power via a power supply circuit 195 that is controlled by the CPU 136 and that includes a PNP transistor 195a.

When the CPU 136 maintains the base potential of the PNP transistor 195a at the 'L' level, the output power from the DC/DC converter 171 is supplied to the memory card 139. When the base potential of the PNP transistor 195a is turned to the 'H' level, the power supply to the memory card 139 is shut off.

Fig. 9 also shows a voltage detection circuit 193 that detects the voltage at the anode of the diode 191 on the battery side. If a voltage of a predetermined value (for example 1.5 V) or less is detected in the voltage detection circuit 193, the output of the voltage detection circuit 193 turns to the 'H' level. This causes an NPN transistor 194 to conduct, so that an 'L' level signal is sent to the CPU 136. In response to this, the CPU 136 sends an 'L' level signal to the write protect terminal WP of the memory card 139. The CPU 136 then turns off the PNP transistor 195a to shut off the power supply to the memory card 139.

If the battery lid 150 shown in Fig. 2 is opened to separate the battery contact plate 153 from the batteries 161 and 162, a voltage drop is detected in the voltage detection circuit 193 and the memory card 139 shifts to the write protect state. Therefore, if a person opens the battery lid 150 to try to remove the memory card 139 from the memory card slot 151 (see Fig. 2), the memory card shifts to the write protect state upon the opening of the battery lid 150. Then, the memory card can be safely removed from the memory card slot 151.

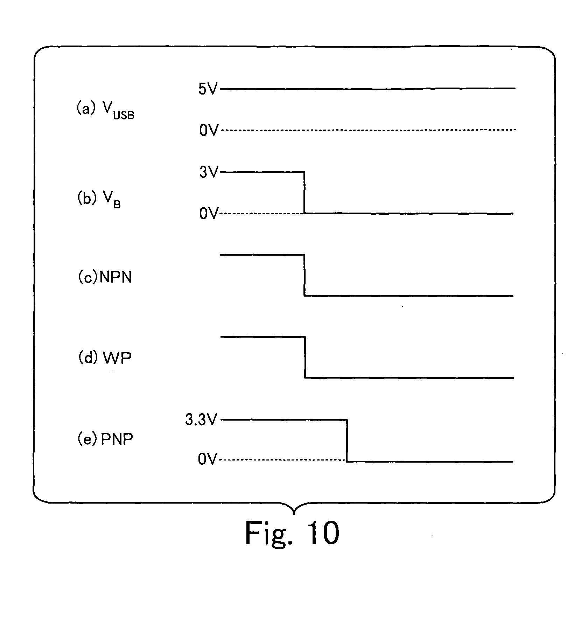

Fig. 10 is a timing chart for the circuitry shown in Fig. 9.

The USB power supply terminal 107a shown in Fig. 9 is supplied with the power with a voltage V_{USB} = 5.0 V (part (a) of Fig. 10) from the personal computer 200 via the USB cable 300 (see Figs. 7 and 8). If the battery lid 150 (see Fig. 2) is opened to disconnect the battery contact plate 153 and the batteries 161, 162 (see part (b) of Fig. 10), a voltage drop is detected in the voltage detection circuit 193. The voltage detection circuit 193 outputs the 'H' level signal, which turns the collector of the NPN transistor 194 to the 'L' level as shown in part (c) of Fig. 10 to notify the CPU 136 of the voltage drop. In response to the voltage drop notified by the 'L' level signal, the CPU 136 turns the write protect terminal WP of the memory card 139 to the 'L' level (part (d) of Fig. 10) to turn the memory card 139 to the write protect state.

The CPU 136 then turns off the PNP transistor 195a to shut off the power supply to the memory card 139.

Here, as long as the power is supplied from the USB power supply terminal 107a, the power is properly supplied to the internal circuitry including the CPU 136 and the memory card 139 even if the power supply from the batteries 161 and 162 is shut off. However, the memory card 139 is turned to the write protect state upon the opening of the battery lid 150. This is for the following reason.

After the power supply from the batteries 161 and 162 ceases, if operation is continued using the power supplied from the USB power supply terminal 107a without turning the memory card 139 to the write protect state, the following situation may arise. That is, the battery lid 150 may be opened and the memory card 139 may be removed when data is being written on the memory card 139 under instructions from the personal computer (see Figs. 7 and 8), for example when data is being written on the memory card 139 for deleting data stored on the memory card 139 according to a deletion format. Therefore, the voltage detection circuit 193 detects the battery voltage, and provides write protect if the power supply from the batteries ceases (which indicates that the battery lid 150 may have been opened to remove the memory card). Thus, the memory card is prevented from corruption.

In this second embodiment, the voltage drop is detected at the point e shown in Fig. 9. However, the voltage drop may be detected at the point d.

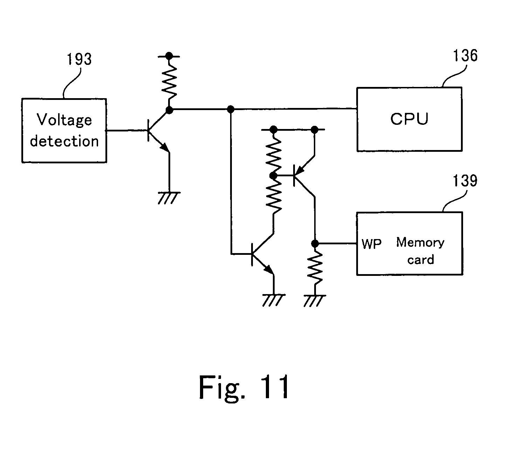

Fig. 11 shows a variation of the first and second embodiments.

In the first and second embodiments, as shown in Figs. 4 and 9, the control for turning the memory card 139 to the write protect state by supplying the 'L' level signal to the write protect terminal WP of the memory card 139 is performed via the CPU 136. In circuitry shown in Fig. 11, while the voltage detection circuit 193 notifies the CPU 136 of a voltage drop, it also sends a control signal for write protect ('L' level) to the memory card 139 in parallel with the notification.

In this manner, write protect for the memory card 139 may be or may not be performed via the CPU 136.

The above description is provided for a digital camera by way of example. However, the apparatus according to the present invention may be a digital camera, or a device such as a PDA or a cellular phone having functions of a digital camera. Further, the present invention may be applied to any apparatus that do not have functions of a digital camera, but in which a battery is removably loaded and a memory card is detachably inserted so that the apparatus is supplied with power from the battery and performs processing including writing data on the memory card.

In addition, in the above description, the memory card slot 151 is provided inside the battery lid 150 to be accessible by opening the battery lid 150. However, the memory card slot 151 may not necessarily be inside the battery lid 150 to be accessible by opening the battery lid 150, but a lock mechanism may be provided such that the memory card cannot be removed unless the battery lid 150 is opened.

## Claims

1. An apparatus in which a battery is removably loaded and a memory card is detachably inserted so that the apparatus is supplied with power from the battery and performs processing including writing data on the memory card, the apparatus comprising:
a battery room into which the battery is loaded;
a battery lid that has a battery contact plate and openably closes the battery room;
a memory card slot into which the memory card is inserted;
removal interface means that allows the memory card inserted into the memory card slot to be removable only when the battery lid is open;
a voltage detection circuit that detects a voltage drop due to opening of the battery lid; and
a write operation inhibit circuit that inhibits data write operation on the memory card in response to detection of the voltage drop to a predetermined voltage by the voltage detection circuit.

2. The apparatus according to claim 1 further comprising a power supply circuit having an output from which power from the battery in the battery room is supplied toward internal circuitry, and to which a capacitor that stabilizes an output voltage is connected,
wherein the voltage detection circuit detects a voltage at the output of the power supply circuit.

3. The apparatus according to claim 1 further comprising:
an external terminal that receives external power supply; and
two diodes in which each cathode is interconnected while an anode of one diode is connected to the battery and an anode of the other diode is connected to the external terminal, and power is supplied to internal circuitry via a node of the interconnected cathodes;
wherein the voltage detection circuit detects a voltage at the anode of one of the two diodes that has its anode connected to the battery.

4. The apparatus according to claim 1, wherein the removal interface means allows the memory card inserted into the memory card slot to be removable only when the battery lid is open by having the memory card slot arranged to be opened and closed together with the battery room by the battery lid.

5. The apparatus according to claim 1, wherein the apparatus is an image taking apparatus that takes an image of a subject, obtains image data, and writes the image data on the memory card.

6. The apparatus according to claim 3, wherein
the external terminal is a terminal that accepts connection of a communication cable compatible with a communication standard for both power supply and data communication, and
the apparatus is supplied with power via the communication cable connected to the external terminal and sends and/or receives data via the communication cable.
